# EUROPÄISCHE PATENTSCHRIFT

(11) **EP 1 299 991 B1**
(45) Veröffentlichungstag und Bekanntmachung des Hinweises auf die Patenterteilung: **10.12.2003**
(21) Anmeldenummer: 01960120.2
(22) Anmeldetag: 12.07.2001
(51) Int. Cl.: H04M 1/725, H04Q 7/26

(54) **VERFAHREN ZUR INFORMATIONSÜBERMITTLUNG UND ENTSPRECHENDES ZENTRALES KOMMUNIKATIONSGERÄT**
METHOD FOR TRANSMITTING INFORMATION AND CENTRAL COMMUNICATION DEVICE THEREFOR
PROCEDE DE TRANSMISSION D'INFORMATIONS ET DISPOSITIF CENTRAL DE COMMUNICATION CORRESPONDANT

(30) Priorität: 12.07.2000 DE 10033729
(43) Veröffentlichungstag der Anmeldung: 09.04.2003
(73) Patentinhaber: SIEMENS AKTIENGESELLSCHAFT, 80333 München (DE)
(72) Erfinder: DAFCIK, Juan, 85375 Neufahrn (DE)
(86) Internationale Anmeldenummer: DE0102614
(87) Internationale Veröffentlichungsnummer: WO02005526

(56) Entgegenhaltungen:
- EP-A- 0 542 118
- WO-A-94/09599
- WO-A-98/39941
- US-A- 5 596 633
- US-A- 5 940 767

## Beschreibung

Die Erfindung betrifft ein Verfahren zur Informationsübermittlung innerhalb einer Nutzergruppe nach dem Oberbegriff von Anspruch 1. Darüber hinaus betrifft die Erfindung ein zentrales Kommunikationsgerät zur Durchführung des Verfahrens nach dem Obergriff von Anspruch 16.

Die Gegenstände der Oberbegriffe der Ansprüche 1 und 16 sind aus der EP-A-0 542 118 bekannt. Bei einem solchen Verfahren bzw. einer solchen Vorrichtung ist es allerdings von Nöten, dass ein Nutzer aktiv Handlungen ausführt, um zu gewährleisten, dass er für ihn als Teil einer Nutzergruppe gespeicherte Informationen erhält.

Des weiteren ist es aus der US-A-5,596,633 bekannt, die Anwesenheit eines registrierten Kommunikationsendgerätes an einem Standort zu ermitteln, wobei eine Übermittlung und/oder Ausgabe von Informationen für den Nutzer erfolgt, wenn das Kommunikationsendgerät des betreffenden Nutzers als anwesend ermittelt ist.

Allgemein ist darauf hin zu weisen, dass immer mehr Menschen Mobiltelefone oder Pager nutzen, um ständig für andere Personen telefonisch erreichbar zu sein oder zumindest Daten, beispielsweise Kurznachrichten, austauschen oder zumindest empfangen zu können. Ebenso benutzen immer mehr Menschen für ihre tägliche Organisation sogenannte PDA's (Personal Digital Assistants) zur Speicherung von Adressen, als Notizbuch etc. Neueste Entwicklungen gehen dahin, dass Mobilfunkgeräte und PDA's insoweit verschmelzen, dass in der Regel demnächst nur noch ein Gerät benötigt wird, welches sowohl die Funktionen eines Mobilfunkgerätes als auch die vollständige Angebotspalette eines PDA's aufweist. Aufgrund der immer einfacher werdenden Bedienung werden diese Geräte immer mehr auch von nicht besonders technisch orientierten bzw. informierten Personen genutzt.

Trotz der weiten Verbreitung dieser Geräte werden üblicherweise in Gruppen, welche einen gemeinsamen lokalen Anlaufpunkt haben, an den sich verschiedene Gruppenmitglieder zu verschiedenen Tageszeiten aufhalten, Informationen zwischen den Gruppenmitgliedern dadurch ausgetauscht, dass am Standort Zettel für ein anderes Gruppenmitglied hinterlegt werden. Bei Informationen, die die ganze Gruppe betreffen, wird dieser Zettel beispielsweise zentral an einem "Schwarzen Brett" angeheftet. Ein typisches Beispiel für eine solche kleine, definierte Gruppe ist eine Familie, eine Wohngemeinschaft oder eine Gruppe von Mitarbeitern in einem Büro. Diese "Zettelkommunikation" ist jedoch häufig nicht sehr effektiv, da vielfach Gruppenmitglieder die Nachrichten der anderen übersehen. Obwohl in vielen Gruppen nahezu alle Gruppenmitglieder ein eigenes Kommunikationsendgerät benutzen, werden die damit zur Verfügung stehenden Kommunikationsmittel (SMS oder Sprach-Mobilfunk) in der Regel nicht für die ständige Kommunikation unter den Gruppenmitgliedern genutzt, da entweder ständig Verbindungen zu den einzelnen Gruppenmitgliedern aufgebaut werden müssen, oder eventuell von den Kommunikationsendgeräten zur Verfügung gestellte Gruppenfunktionen für den unerfahrenen Nutzer zu kompliziert sind.

Es ist Aufgabe der vorliegenden Erfindung, ein moderneres sicheres und komfortables Verfahren zur Informationsübermittlung bzw. zum Informationsaustausch innerhalb einer solchen Gruppe zu schaffen, wobei die von den Gruppenmitgliedern verwendeten Kommunikationsendgeräte genutzt werden. Es ist weiterhin Aufgabe der Erfindung, ein zentrales Kommunikationsendgerät zur Durchführung des Verfahrens zu schaffen.

Diese Aufgaben werden durch ein Verfahren gemäß Anspruch 1 und durch ein zentrales Kommunikationsendgerät gemäß Anspruch 16 gelöst.

Gemäß dem erfindungsgemäßen Verfahren müssen zunächst die betreffenden Kommunikationsendgeräte der zur Nutzergruppe gehörenden Nutzer bei einem zentralen Kommunikationsendgerät registriert werden. Dies kann beispielsweise jederzeit in einem speziellen Registrierungsmodus des jeweiligen Kommunikationsendgeräts bzw. des zentralen Kommunikationsgeräts erfolgen. Bei einem gemeinsamen Verkauf eines Systems, welches beispielsweise aus einem zentralen Kommunikationsgerät und mehreren passenden Kommunikationsendgeräten besteht, kann diese Registrierung auch werkseitig erfolgen. Im Folgenden umfasst der Begriff "Kommunikationsendgerät" im Übrigen alle der eingangs genannten Geräte, die eine geeignete Schnittstelle zur Kommunikation mit anderen Geräten aufweisen.

Der Austausch bzw. die Übermittlung der Information erfolgt dann auf folgende Weise:

Zunächst müssen die Informationen in dem zentralen Kommunikationsgerät mittels der Tastatur gespeichert werden, wobei die Informationen der gesamten Nutzergruppe bzw. einer Teilgruppe oder einem bestimmten einzelnen Nutzer der Nutzergruppe zugeordnet werden. Diese Informationshinterlegung ist jederzeit möglich und kann aktiv von einem Bediener des zentralen Kommunikationsgeräts erfolgen.

Vom zentralen Kommunikationsendgerät werden dann die Informationen an den bzw. die betreffenden Nutzer weitergeleitet, indem zunächst die Anwesenheit des Kommunikationsendgeräts des betreffenden Nutzers an einem Standort oder in einem bestimmten räumlichen Aufenthaltsbereich um den Standort einer Schnittstellen- und/oder Ausgabeeinrichtung des zentralen Kommunikationsgeräts festgestellt wird. Das heißt, es wird beispielsweise festgestellt, ob sich der Nutzer bzw. das von ihm mitgeführte Kommunikationsendgerät in der Nähe der Ausgabeeinrichtung befindet oder ob beispielsweise das Kommunikationsendgerät sich innerhalb der Reichweite einer drahtlosen Schnittstelle befindet oder beispielsweise in einem Steckplatz mit einer Schnittstelle eingesteckt ist.

Sobald feststeht, dass sich das Kommunikationsendgerät bzw. der Nutzer am Standort bzw. im gewählten Aufenthaltsbereich aufhält, werden die dem Nutzer zugeordneten, gespeicherten Informationen entweder vom zentralen Kommunikationsgerät über die Schnittstelleneinrichtung an das Kommunikationsendgerät des Nutzers übermittelt oder alternativ die Informationen für den betreffenden Nutzer durch die Ausgabeeinrichtung des zentralen Kommunikationsgeräts ausgegeben. Diese Ausgabe kann akustisch, als Ausdruck oder grafisch auf einem Display oder kombiniert auf verschiedene Weise erfolgen. Selbstverständlich kann auch sowohl eine Übermittlung der Informationen auf das Kommunikationsendgerät und gleichzeitig eine Ausgabe der Informationen am zentralen Kommunikationsgerät erfolgen.

Ein zentrales Kommunikationsgerät zur Durchführung eines solchen Verfahrens muss hierfür zunächst einen ersten Speicher zum Speichern von Registrierungsdaten von Kommunikationsendgeräten der zur Nutzergruppe gehörenden Nutzer sowie einen zweiten Speicher zum Speichern von Informationen für die Nutzer aufweisen. Bei diesen Speichern kann es sich selbstverständlich auch um Speicherbereiche eines Gesamtspeichers handeln. Des Weiteren benötigt das zentrale Kommunikationsendgerät Mittel zum Zuordnen der Informationen zu den bestimmten Nutzern bzw. zur Teilgruppe der Nutzergruppe oder zur gesamten Nutzergruppe. Weiterhin muss das Gerät Mittel aufweisen, mit denen die Anwesenheit eines registrierten Kommunikationsendgeräts an dem Standort oder in einem bestimmten räumlichen Aufenthaltsbereich um den Standort einer Schnittstellen- und/oder Ausgabeeinrichtung des zentralen Kommunikationsgeräts ermittelt werden kann. Außerdem benötigt das zentrale Kommunikationsgerät entsprechende Mittel zur Versendung der einem Nutzer zugeordnetenen Informationen über die Schnittstelleneinrichtung an das Kommunikationsendgerät des Nutzers, sofern dieser Nutzer als anwesend ermittelt wird, bzw. benötigt es Mittel zur Ausgabe der jeweils für den Nutzer bereitstehenden Informationen mittels der Ausgabeeinrichtung und eine Tastatur zum Speichern von Informationen in dem zweiten Speicher.

Die Ermittlung der Anwesenheit eines Kommunikationsendgeräts eines bestimmten Nutzers kann auf verschiedene Weise und zu verschiedenen Zeitpunkten erfolgen.

Bei einer Ausführungsform wird jeweils dann die Anwesenheit eines Kommunikationsendgeräts eines bestimmten Nutzers automatisch ermittelt, wenn in dem zentralen Kommunikationsgerät dem bestimmten Nutzer eine Information zugeordnet wird, beispielsweise von einem anderen Nutzer eine Information für ihn hinterlegt wird.

Bei einer anderen Ausführungsform wird zur Ermittlung der Anwesenheit eines Kommunikationsendgeräts dieses Kommunikationsendgerät beim zentralen Kommunikationsgerät angemeldet, sobald es sich an dem Standort oder in dem bestimmten Aufenthaltsbereich um den Standort der Schnittstellen bzw. Ausgabeeinrichtung befindet. Ebenso wird es entsprechend abgemeldet, wenn es vom Standort oder aus diesem Aufenthaltsbereich entfernt wird. In dem zentralen Kommunikationsgerät ist dann jederzeit verzeichnet, welche Kommunikationsendgeräte gerade abgemeldet oder angemeldet sind.

Die Anmeldung bzw. Abmeldung kann entweder durch einen aktiven Vorgang des Nutzers oder auch automatisch erfolgen. Bei einem Ausführungsbeispiel wird aktiv vom Nutzer des Kommunikationsendgeräts jeweils ein Anmeldungs- bzw. Abmeldungssignal an das zentrale Kommunikationsgerät gesendet. Dies kann beispielsweise über eine kurzreichweitige Schnittstelle, z. B. eine Bluetooth-, IrDA- oder Ultraschall-Schnittstelle, geschehen. Eine weitere Möglichkeit besteht darin, dass das zentrale Kommunikationsendgerät als Schnittstelleneinrichtung eine beispielsweise innerhalb einer Aufnahmeschale angeordnete Kontaktschnittstelle umfasst, in die das Kommunikationsendgerät des Nutzers bei Anwesenheit eingesteckt bzw. eingelegt wird. Hierbei erfolgt also die Anmeldung automatisch bei einer Verbindung des Kommunikationsendgeräts mit der Kontaktschnittstelle des zentralen Kommunikationsgeräts und die Abmeldung entsprechend automatisch beim Aufheben des Kontakts, beispielsweise beim Herausnehmen aus der Aufnahmeschale.

Bei Verwendung von Kontaktschnittstellen für die einzelnen Kommunikationsendgeräte der Nutzer, z. B. in Form von Aufnahmeschalen, weist das zentrale Kommunikationsgerät vorzugsweise für jedes Kommunikationsendgerät eines jeden Nutzers eine eigene Kontaktschnittstelle auf. Vorzugsweise handelt es sich hierbei auch gleichzeitig um Aufnahmeschalen mit der Funktion einer Ladeschale, das heißt, bei einem eingesteckten Kommunikationsendgerät wird gleichzeitig der Akku des Geräts aufgeladen. Dies zwingt die Nutzer dazu, sich regelmäßig anzumelden. Um das System erweiterungsfähig zu halten, ist das zentrale Kommunikationsgerät vorteilhafterweise modular aufgebaut, das heißt, es ist möglich, mehrere Kontaktschnittstellen nebeneinander zu koppeln. Dies ist beispielsweise durch Verwendung eines geeigneten erweiterbaren BUS-Systems zur Verbindung der Kontaktschnittstellen-Module untereinander und mit dem Hauptgerät des zentralen Kommunikationsgeräts möglich.

Bei Verwendung einer drahtlosen Schnittstelleneinrichtung ist der Aufenthaltsbereich um den Standort der Schnittstelleneinrichtung vorzugsweise mit der Reichweite der Schnittstelle korreliert. Auch hier kann automatisch eine An- und Abmeldung erfolgen, in dem beispielsweise das zentrale Kommunikationsendgerät in regelmäßigen zeitlichen Abständen abfragt, welche der registrierten Kommunikationsendgeräte sich innerhalb der Reichweite der drahtlosen Schnittstelle befinden. Diese Kommunikationsendgeräte gelten dann als angemeldet, und ein Kommunikationsendgerät, welches nicht mehr antwortet, gilt automatisch als abgemeldet.

Bei einer weiteren Ausführungsform erfolgt sämtliche Kommunikation zwischen dem zentralen Kommunikationsendgerät und den Kommunikationsendgeräten der Nutzer über ein Mobilfunksystem, beispielsweise GSM oder UMTS. Hierzu muß es sich bei den Kommunikationsendgeräten selbstverständlich um Mobilfunkgeräte oder andere über Mobilfunk erreichbare Geräte handeln. Ebenso muß das zentrale Kommunikationsgerät einen Mobilfunkzugang, eventuell auch über einen Festnetzanschluss, aufweisen. Es wird dabei ein bestimmter Aufenthaltsbereich um das Kommunikationsendgerät bzw. eine Ausgabeeinrichtung, beispielsweise ein Display oder eine Sprachausgabe des zentralen Kommunikationsendgeräts, festgelegt und dann beispielsweise innerhalb des Mobilfunknetzes oder über GPS der Standort eines jeden Kommunikationsendgeräts ermittelt und festgestellt, ob sich das jeweilige Kommunikationsendgerät innerhalb oder außerhalb des definierten Aufenthaltsbereichs befindet. Dementsprechend gilt das Gerät als anwesend bzw. angemeldet oder abgemeldet.

Bei den übertragenen Informationen kann es sich um Informationen handeln, die von einem Nutzer am zentralen Kommunikationsgerät für einen anderen Nutzer bzw. eine Nutzergruppe eingegeben wurden. Ebenso kann es sich um Informationen handeln, die beispielsweise vom zentralen Kommunikationsgerät selbsttätig, z. B. aus dem Internet, per WAP o. ä., für einen bestimmten Nutzer oder die Nutzergruppe ermittelt wurden. Diese Informationen werden dann einseitig an das Kommunikationsendgerät übermittelt.

Selbstverständlich ist es ebenso möglich, dass der jeweilige Nutzer über sein Kommunikationsendgerät Informationen für andere Nutzer der Nutzergruppe an das zentrale Kommunikationsgerät übermittelt. Dies geschieht vorzugsweise entweder beim An- oder Abmelden oder wenn das zentrale Kommunikationsgerät Informationen an das Kommunikationsendgerät des Nutzers übermittelt. So wird vorzugsweise auch ein Abgleich zwischen Datenbanken des zentralen Kommunikationsgeräts und des jeweiligen Kommunikationsendgeräts des Nutzers durchgeführt, wobei die Datenbanken insbesondere Terminkalender oder Adressenverzeichnisse sein können. Auf diese Weise ist es äußerst komfortabel möglich, Termine, die verschiedene Mitglieder der Nutzergruppe betreffen, untereinander abzustimmen, gleichzeitig festzuhalten und die einzelnen Mitglieder daran zu erinnern.

Als Ausgabeeinrichtung weist das zentrale Kommunikationsgerät vorzugsweise ein Display und eine Sprachausgabe auf. Es ist vorgesehen, über eine Tastaturschnittstelle eine Tastatur anzustecken, sodass über diese Tastatur beim zentralen Kommunikationsgerät bequem Textnachrichten eingegeben werden können.

Optionale Komponenten für das zentrale Kommunikationsgerät sind ein Anschluss zu einem Telefonfestnetz, eine Einrichtung zum Anschluss einer Haustelefonanlage sowie eine Mobilfunk-Sende-/Empfangseinrichtung.

In diesem Fall weist das zentrale Kommunikationsgerät vorzugsweise auch Mittel auf, um auf dem einen Anschluss, beispielsweise im Festnetz, ankommende Verbindungen, auf einen anderen Anschluss, beispielsweise das Mobilfunknetz oder die Hausanlage, umzuschalten. Es ist so eine Verbindung zwischen allen Kommunikationssystemen möglich, sodass das zentrale Kommunikationsgerät auch gleichzeitig als universelle Schaltzentrale dient.

Über die genannten Anschlüsse besteht auch die Möglichkeit, mit dem zentralen Kommunikationsgerät die Informationen vom Internet oder per WAP zu erhalten und beliebig über e-mail, SMS oder Sprache zu kommunizieren.

Außerdem kann in diesen Fällen die Person, die für einen anderen Nutzer eine Information hinterlegt, bei der Eingabe der Information in das zentrale Kommunikationsgerät auswählen, ob diese Nachricht sofort, beispielsweise per SMS, an das Kommunikationsendgerät des Empfängers der Nachricht versendet werden soll, sofern dieses Kommunikationsendgerät nicht anwesend bzw. abgemeldet ist, oder ob die Nachricht zunächst im zentralen Kommunikationsgerät gespeichert wird und erst dann an das Kommunikationsendgerät des jeweiligen Nutzers übermittelt bzw, auf der Ausgabe des zentralen Kommunikationsgeräts für den Nutzer ausgegeben wird, sobald der entsprechende Nutzer sich anmeldet bzw. als anwesend registriert wird.

Bei einem besonders komfortablen zentralen Kommunikationsgerät mit Festnetzanschluss besteht außerdem die Möglichkeit, dass automatisch, wenn ein Kommunikationsendgerät eines Nutzers abgemeldet wird, eine Rufumleitung aller für diesen Nutzer ankommenden Anrufe auf das Kommunikationsendgerät (sofern es sich hierbei um ein Mobilfunkgerät handelt) oder auf einen anderen vom jeweiligen Nutzer gewünschten Teilnehmeranschluss geschaltet wird.

Bei einer weiteren besonders bevorzugten Ausführungsform weist das zentrale Kommunikationsgerät die Möglichkeit auf, mittels eines Befehls, beispielsweise durch Drücken einer einzigen Taste, über den Festnetzanschluss oder das Mobilfunk-Sende-/Empfangsteil eine Konferenzschaltung zu den Mobilfunkgeräten der Mitglieder der Nutzergruppe herzustellen, wobei zumindest alle die Mobilfunkgeräte erreicht werden, die abgemeldet sind, d. h. alle die Mitglieder der Nutzergruppe, die sich nicht in einem bestimmten Umkreis um das zentrale Kommunikationsgerät aufhalten.

Anstelle über ein eigenes Mobilfunk-Sende-/Empfangsteil über ein Mobilfunknetz zu kommunizieren, hat das zentrale Kommunikationsgerät auch die Möglichkeit über ein als anwesend ermitteltes Kommunikationsendgerät eines Benutzers über ein Mobilfunknetz zu kommunizieren, sofern es sich hierbei um ein Mobilfunkgerät handelt. So können beispielsweise über die Schnittstelle und das Mobilfunkgerät SMS-Nachrichten versendet oder empfangen werden oder auch Anrufe durchgeführt werden. Da in der Regel zumindest der Nutzer, welcher das zentrale Kommunikationsgerät gerade bedient, sich mit seinem Mobilfunkgerät am Standort befindet, ist nahezu immer eine solche Verbindungsmöglichkeit gegeben, sodass im Prinzip auch auf ein eigenes Mobilfunk-Sende-/ Empfangsteil des zentralen Kommunikationsgeräts verzichtet werden kann.

Bei einer weiteren bevorzugten Ausführungsform werden automatisch beim Anmelden eines Kommunikationsendgeräts eines Nutzers beim zentralen Kommunikationsgerät, beispielsweise beim Einstecken in die Aufnahme, verschiedene Funktionsparameter des Kommunikationsendgeräts des Nutzers umgestellt. Beispielsweise werden, sofern es sich bei dem Kommunikationsendgerät um ein Mobilfunkgerät handelt, spezielle Rufumleitungen aktiviert, Filter gesetzt usw., die es erlauben, dass der Nutzer nur für bestimmte Anrufer erreichbar ist. Ebenso können bestimmte Klingeltöne ausgewählt werden. Dieses Umsetzen der Funktionsparameter im Mobilfunkgerät kann entweder aktiv durch entsprechende Steuerbefehle des zentralen Kommunikationsgeräts erfolgen, sobald das Mobilfunkgerät angemeldet wird. Selbstverständlich kann diese Umsetzung aber auch vom Mobilfunkgerät selbst durchgeführt werden, sobald es angemeldet wird.

Außerdem können automatisch alle am Mobilfunkgerät ankommenden Anrufe auf die Hausanlage weitergeleitet werden. Ebenso ist es für einen Nutzer möglich, über die Hausanlage wahlweise über das Festnetz zu telefonieren oder über das Mobilfunknetz.

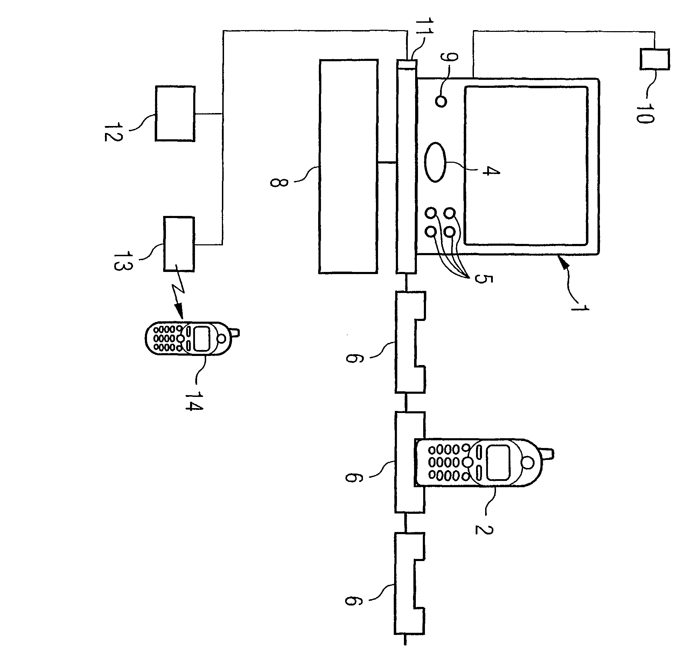

Die Erfindung wird im Folgenden unter Hinweis auf die beigefügte Zeichnung anhand eines Ausführungsbeispiels näher erläutert. Die dort dargestellten Merkmale und die bereits oben beschriebenen Merkmale können nicht nur in den genannten Kombinationen, sondern auch einzeln oder in anderen Kombinationen erfindungswesentlich sein. Es wird an dieser Stelle ausdrücklich darauf hingewiesen, dass auch Merkmale, die nur in Zusammenhang mit dem Verfahren genannt werden, ebenso bezüglich des zentralen Kommunikationsgeräts zur Durchführung des Verfahrens erfindungswesentlich sein können und umgekehrt.

Die einzige Figur zeigt ein schematisches Bild eines erfindungsgemäßen zentralen Kommunikationsgeräts 1, welches im Folgenden auch kurz "Zentralstation" 1 genannt wird. Außerdem wird im Folgenden beispielhaft von der Verwendung von Mobilfunkgeräten 2 als Kommunikationsendgeräte 2 der Nutzer ausgegangen.

Bei dem dargestellten Ausführungsbeispiel ist die Zentralstation 1 modular aufgebaut und weist ein Hauptgerät mit einem Display 3, einem Lautsprecher 4, einem Mikrofon 9 sowie verschiedene Tasten 5 zur Steuerung eines Menüs auf dem Display 3 auf.

Mittels eines erweiterbaren BUS-Systems sind an die Zentralstation 1 mehrere Kontaktschnittstellen 6, im Folgenden auch Aufnahmeplätze 6 genannt, angeschlossen, in welche jeweils Mobilfunkgeräte 2 der einzelnen Nutzer der Nutzergruppe eingesteckt werden können. Bei dem dargestellten Ausführungsbeispiel besteht die Gruppe aus drei Mitgliedern. Dementsprechend sind drei Aufnahmeplätze 6 an die Zentralstation 1 angeschlossen. Insgesamt können bei diesem Ausführungsbeispiel bis zu vier Aufnahmeplätze 6 angekoppelt werden. Die Aufnahmeplätze 6 dienen auch gleichzeitig als Ladestationen für die Akkus der eingesteckten Mobilfunkgeräte 2.

Über eine Tastaturschnittstelle 7 ist an die Zentralstation 1 eine Tastatur 8 angeschlossen. Bei dieser Tastaturschnittstelle 7 kann es sich um eine drahtlose Schnittstelle handeln. Vorzugsweise ist die Tastatur 8 aber über die Schnittstelle 7 angesteckt, wobei es sich um eine Tastatur 8 handelt, welche auch direkt an ein Mobilfunkgerät 2 gesteckt werden kann.

Die Zentralstation 1 weist außerdem einen Festnetzanschluss 10 (z. B. analog oder ISDN) auf sowie eine Anschlusseinrichtung 11 zum Anschluss an eine Haustelefonanlage 12, 13, 14. Dabei spielt es keine Rolle, ob die an der Anschlusseinrichtung 11 angeschlossenen Telefonanlage ein einzelnes, herkömmliches Telefon, eine Telefonanlage mit mehreren Nebenstellen oder ein Schnurlos-Telefon bzw. Telefonanlage ist. Im dargestellten Ausführungsbeispiel handelt es sich um eine Schnurlosanlage 13, 14 nach dem DECT-Standard. Ebenso ist ein Anrufbeantworter 12 angeschlossen.

Diese Zentralstation 1 bildet eine Kommunikations- und Informationsplattform für eine Kleingruppe, welche ein gemeinsames Haus oder Büro nutzt, beispielsweise eine Familie. Durch die verschiedenen Anschlüsse 10, 11 bildet die Zentralstation 1 außerdem eine Art Adapter zwischen einem Festnetzanschluss 10, den an den Aufnahmeplätzen 6 eingesteckten Mobilfunkgeräten 2 und der Haustelefonanlage 12, 13, 14.

Über die Tastatur 8 können von verschiedenen Mitgliedern der Nutzergruppe Nachrichten für andere Mitglieder der Nutzergruppe oder Teilgruppen bzw. die gesamte Nutzergruppe hinterlegt werden. Dies geschieht durch Abspeicherung in einem entsprechenden Informationsspeicher, wobei die Informationen jeweils den Gruppenmitgliedern bzw. der ganzen Gruppe oder Teilgruppe zugeordnet werden. Weiterhin ist es über den Festnetzanschluss 10 möglich, automatisch oder durch entsprechende Bedienung Informationen aus dem Internet oder per WAP, beispielsweise Services bzgl. Wetter, Aktien, Veranstaltungen usw., anzufordern. Ebenso können automatisch Tagesangebote von Geschäften in der unmittelbaren Nähe mittels WAP oder SMS empfangen werden und auf dem Display dargestellt oder für bestimmte Mitglieder der Nutzergruppe als Informationen gespeichert werden. Das Gleiche gilt selbstverständlich für emails oder Sprachnachrichten. Ebenso ist es über die Zentralstation 1 jederzeit möglich, SMS, emails oder sonstige Nachrichten zu versenden.

Diese Informationen werden in der Zentralstation 1 für einen Nutzer solange gespeichert, bis dieser Nutzer sein Mobilfunkgerät 2 in den entsprechenden Aufnahmeplatz 6 einsteckt. Beim Einstecken erfolgt automatisch eine Anmeldung des Mobilfunkgeräts 2 des jeweiligen Nutzers bei der Zentralstation 1. Das Abmelden eines Mobilfunkgeräts 2 erfolgt automatisch mit der Entnahme des Mobilfunkgerätes 2 aus dem Aufnahmeplatz 6.

Je nach Art der Information bzw. nach Wunsch des Versenders der Information werden dann nach dem Anmelden alle seit dem letzten Abmelden in der Zwischenzeit für den jeweiligen Nutzer hinterlegten Informationen, auf dem Display 3 der Zentralstation 1 dargestellt oder über den Lautsprecher 4 ausgegeben. Zusätzlich oder alternativ können diese Informationen auf das Mobilfunkgerät 2 des Nutzers übertragen werden. Alternativ oder zusätzlich kann - z. B. bei wichtigen Nachrichten, die den jeweiligen Empfänger sofort erreichen sollen - die Information auch direkt, beispielsweise in Form einer SMS, versendet werden.

Weiterhin ist es möglich, dass beim Anmelden ein Abgleich verschiedener Dateien zwischen der Zentralstation 1 und des Mobilfunkgeräts 2 des Nutzers erfolgt. Insbesondere ist ein Abgleich von Datenbanken wie Terminkalendern und Adressverzeichnissen möglich.

So befindet sich im Speicher der Zentralstation 1 im vorliegenden Ausführungsbeispiel ein Terminkalender für die ganze Gruppe, auf dem sämtliche Termine der einzelnen Gruppenmitglieder verzeichnet sind. Beim Anmelden eines Mobilfunkgeräts 2 eines Nutzers werden dann alle Termine, die der Nutzer in seinem Mobilfunkgerät 2 seit dem letzten Abmelden eingetragen hat, an den Gruppenterminkalender in der Zentralstation 1 übermittelt. Umgekehrt werden sämtliche den jeweiligen Nutzer des Mobilfunkgeräts 2 betreffende Termine, welche seit dem Abmelden des Mobilfunkgeräts 2 des Nutzers in dem Terminkalender der Zentralstation 1 eingetragen wurden, an das Mobilfunkgerät 2 übertragen.

Beim Einstecken des Mobilfunkgeräts 2 in den Aufnahmeplatz 6 können außerdem auf Wunsch des Nutzers automatisch spezielle Rufumleitungen, Filter usw. im Mobilfunkgerät 2 eingestellt werden, die speziell für einen Zustand vorgesehen sind, wenn sich der betreffende Nutzer in der Nähe der Zentralstation, beispielsweise zu Hause, befindet. Dies erlaubt es, z. B. nur für bestimmte Anrufer (identifiziert durch Clip) erreichbar zu sein bzw. spezielle Klingeltöne auszuwählen.

Sobald ein Mobilfunkgerät 2 eines Nutzers in einen Aufnahmeplatz 6 eingesteckt worden ist, kann die Zentralstation 1 außerdem über dieses Mobilfunkgerät 2 über das Mobilfunknetz kommunizieren. Das heißt, es können weiterhin Mobilfunkanrufer am Mobilfunkgerät 2 empfangen werden und über die Zentralstation 1 an die Haustelefonanlage weitergegeben werden. Anrufe, die auf dem Mobilfunkgerät 2 ankommen, werden auf die angeschlossene Telefonanlage 13, 14 bzw. den Anrufbeantworter 12 durchgereicht, als ob der Anruf aus einem Festnetz käme. Die Zentralstation 1 bildet in diesem Fall quasi das Festnetz nach. Insoweit kann die Zentralstation im Prinzip auch ohne Festnetzanschluss 10 verwendet werden. Bei einer solchen Version handelt es sich um einen Umsetzer vom Mobilfunknetz auf eine herkömmliche Telefonanlage. Dies ist insbesondere für Orte interessant, an denen kein Festnetzanschluss verfügbar ist, jedoch eine normale Haustelefonanlage gewünscht ist.

In dem dargestellten Ausführungsbeispiel besteht außerdem die Möglichkeit, von der Hausanlage 13, 14 wahlweise über das Festnetz zu telefonieren oder beispielsweise durch eine spezielle Signalisierung (z. B. eine Vorwahl *99) über ein in einem Aufnahmeplatz 6 eingestecktes Mobilfunkgerät 2 über das Mobilfunknetz herauszutelefonieren. Der Vorteil dieses Konzepts besteht darin, dass Kosten gespart werden können, wenn jemand über das Mobilfunknetz günstiger zu erreichen ist als über das Festnetz. Außerdem besteht die Möglichkeit, wenn sämtliche Festnetzleitungen belegt sind, über das Mobilfunknetz eine freie Verbindung zu erhalten.

Die Zentralstation 1 greift prinzipiell nicht in die Festnetzleitung (a/b-Leitung) ein, solange kein Anruf über das Mobilfunknetz angenommen oder abgesendet wird. Daher werden alle Funktionen wie z. B. Gebührenimpulse, CLIP, Fax, Modem usw. wie bisher unterstützt. Bei ankommenden Anrufen kann daher mittels CLIP die Rufnummer auf dem Haustelefon dargestellt werden, wobei durch entsprechendes Voranstellen einer Nummernkombination signalisiert werden kann, ob der Anruf über das Mobilfunknetz oder über Festnetz gekommen ist.

Im vorliegenden Ausführungsbeispiel wird zunächst vom Mobilfunkgerät 2 ein ankommender Mobilfunkruf signalisiert. Nach einer bestimmten Zeitspanne, beispielsweise fünf Sekunden, wird der Anruf über die Zentralstation 1 an die Hausanlage 13, 14 weitergeleitet. Wird der Anruf entgegengenommen, werden die beiden Leitungen verbunden. Wird nicht abgenommen, kann der Benutzer entscheiden, ob die Mailbox des Mobilfunknetzes den Anruf übernimmt oder ob er von dem an der Hausanlage 12, 13, 14 angeschlossenen Anrufbeantworter 12 entgegengenommen werden soll. Dies ist beispielsweise durch entsprechende Einstellung der Mobilfunknetz-Rufumleitung möglich.

Neben der Steuerung über die Tastatur bzw. die Menüsteuertasten 5 ist es auch möglich, die Zentralstation über eine eingebaute Sprachsteuerung zu steuern. Selbstverständlich weist die Zentralstation 1 auch eine Freisprecheinrichtung auf, sodass direkt an der Zentralstation 1 auch Anrufe geführt werden können.

Über eine spezielle Konferenztaste ist es möglich, mit einem einzelnen Tastendruck sämtliche sich zu diesem Zeitpunkt nicht in den Aufnahmeplätzen 6 befindlichen Mobilfunkgeräte 2 der Mitglieder der Nutzergruppe zu einer Konferenzschaltung zu erreichen. Auf diese Weise ist auf äußerst einfache und bedienerfreundliche Weise jederzeit eine Kommunikation unter allen Gruppenmitgliedern möglich.

Bei einem weiteren nicht dargestellten Ausführungsbeispiel weist die Zentralstation als weiteres Modul ein Telematik-Modul auf, mit dem unterschiedliche Haushaltsgeräte über das Telefon gesteuert werden können. Die Steuerung kann hierbei über einen Festnetzanschluss oder über ein Mobilfunk-Sende-/ Empfangsmodul bzw. über ein in einer Aufnahmeeinheit eingestecktes Mobilfunkgerät über Mobilfunk erfolgen.

## Patentansprüche

1. Verfahren zur Informationsübermittlung innerhalb einer Nutzergruppe, wobei den einzelnen Nutzern der Nutzergruppe Kommunikationsendgeräte (2) zugeordnet sind, mit folgenden Schritten:
- Registrieren der Kommunikationsendgeräte (2) der zur Nutzergruppe gehörenden Nutzer bei einem zentralen Kommunikationsgerät (1),
- Abspeichern von Informationen in dem zentralen Kommunikationsgerät (1), wobei die Informationen der gesamten Nutzergruppe oder einer Teilgruppe oder bestimmten, einzelnen Nutzern der Nutzergruppe zugeordnet werden,
- Übermittlung der einem Nutzer eines Kommunikationsendgeräts (2) zugeordneten Informationen vom zentralen Kommunikationsgerät (1) an das Kommunikationsendgerät (2) über eine Schnittstelleneinrichtung (6) des zentralen Kommunikationsgerätes (1) und/oder Ausgabe der Informationen für den betreffenden Nutzer durch eine Ausgabeeinrichtung (3, 4) des zentralen Kommunikationsgerätes (1),
- Ermitteln der Anwesenheit eines registrierten Kommunikationsendgerätes (2) an einem Standort oder in einem bestimmten räumlichen Aufenthaltsbereich um den Standort der Schnittstelleneinrichtung (6) und/oder der Ausgabeeinrichtung (3, 4) des zentralen Kommunikationsgerätes (1), wobei die Übermittlung und/oder Ausgabe der Informationen erfolgt, wenn das Kommunikationsendgerät (2) des betreffenden Nutzers als anwesend ermittelt ist oder sobald das Kommunikationsendgerät (2) des betreffenden Nutzers als anwesend ermittelt wird, **gekennzeichnet durch** :
- das Abspeichern von Informationen für die gesamte Nutzergruppe oder eine Teilgruppe oder bestimmte, einzelne Nutzer der Nutzergruppe in dem zentralen Kommunikationsgerät (1) mittels einer an das zentrale Kommunikationsgerät (1) angeschlossenen Tastatur (8) erfolgt.

2. Verfahren nach Anspruch 1, **dadurch gekennzeichnet, dass** die Ermittlung der Anwesenheit eines Kommunikationsendgeräts (2) eines bestimmten Nutzers automatisch dann erfolgt, wenn in dem zentralen Kommunikationsgerät (1) dem bestimmten Nutzer eine Information zugeordnet wird.

3. Verfahren nach Anspruch 1 oder 2, **dadurch gekennzeichnet, dass** zur Ermittlung der Anwesenheit eines registierten Kommunikationsendgeräts (2) das Kommunikationsendgerät (2) beim zentralen Kommunikationsgerät (1) angemeldet wird, sobald es sich an dem Standort oder in dem bestimmten Aufenthaltsbereich um den Standort der Schnittstellen- und/oder Ausgabeeinrichtung (3, 4, 6) befindet, und abgemeldet wird, wenn es vom Standort oder aus diesem Aufenthaltsbereich entfernt wird.

4. Verfahren nach Anspruch 3, **dadurch gekennzeichnet, dass** die Anmeldung und/oder Abmeldung eines Kommunikationsendgeräts (2) bei dem zentralen Kommunikationsgerät (1) mittels eines vom Kommunikationsendgerät (2) an das zentrale Kommunikationsgerät (1) gesendeten Anmeldungs- bzw. Abmeldungssignals erfolgt, wobei die Aussendung des Anmeldungs- bzw. Abmeldungssignals aktiv vom Nutzer des Kommunikationsendgeräts (2) ausgelöst wird.

5. Verfahren nach Anspruch 3 oder 4, **dadurch gekennzeichnet, dass** die Anmeldung und/oder Abmeldung des Kommunikationsendgeräts (2) des Nutzers automatisch durch das zentrale Kommunikationsgerät (1) erfolgt.

6. Verfahren nach einem der Ansprüche 1 bis 5, **dadurch gekennzeichnet, dass** die Schnittstelleneinrichtung (6) des zentralen Kommunikationsgeräts (1) eine Kontaktschnittstelle (6) zu dem Kommunikationsendgerät (2) des Nutzers umfasst.

7. Verfahren nach einem der Ansprüche 1 bis 6, **dadurch gekennzeichnet, dass** die Schnittstelleneinrichtung des zentralen Kommunikationsgerät eine kurzreichweitige, drahtlose Schnittstelle umfasst und der Aufenthaltsbereich um den Standort mit der Reichweite der Schnittstelle korreliert ist.

8. Verfahren nach einem der Ansprüche 1 bis 7, **dadurch gekennzeichnet, dass** ein Kommunikationsendgerät (2) bei der Übermittlung von Informationen vom zentralen Kommunikationsgerät (1) an das Kommunikationsendgerät (2) und/oder bei einer Anmeldung beim zentralen Kommunikationsendgerät (1) Informationen für die Nutzergruppe, eine Teilgruppe oder einen bestimmten Nutzer der Nutzergruppe an das zentrale Kommunikationsgerät (2) übermittelt.

9. Verfahren nach einem der Ansprüche 1 bis 8, **dadurch gekennzeichnet, dass** die Informationsübermittlung zwischen dem zentralen Kommunikationsgerät (1) und dem Kommunikationsendgerät (1) einen Abgleich einer Datenbank umfasst .

10. Verfahren nach Anspruch 9, **dadurch gekennzeichnet, dass** die Datenbank einen Terminkalender umfasst.

11. Verfahren nach einem der vorstehenden Ansprüche, **dadurch gekennzeichnet, dass** die Kommunikationsendgeräte (2) der Nutzer Mobilfunkgeräte (2) sind.

12. Verfahren nach Anspruch 11, **dadurch gekennzeichnet, dass** ein angemeldetes Kommunikationsendgerät (2) eines Nutzers genutzt wird, um vom zentralen Kommunikationsgerät (1) aus über ein Mobilfunknetz Informationen zu versenden und/oder zu empfangen.

13. Verfahren nach Anspruch 11 oder 12, **dadurch gekennzeichnet, dass** das zentrale Kommunikationsgerät (1) einen Festnetzanschluss (10) aufweist und automatisch für einen Nutzer auf dem Festnetzanschluss ankommende Anrufe der Nutzergruppe auf das Mobilfunkgerät (2) des Nutzers oder einem anderen vorbestimmten Anschluss umgeleitet werden, wenn das Mobilfunkgerät (2) des Nutzers beim zentralen Kommunikationsgerät (1) abgemeldet ist.

14. Verfahren nach Anspruch 12 oder 13 , **dadurch gekennzeichnet, dass** vom zentralen Kommunikationsgerät (1) aus mittels (nur) eines Befehls eine Telefon-Konferenzschaltung zumindest zu allen den Kommunikationsendgeräten der Nutzer der Nutzergruppe geschaltet wird, die nicht als anwesend ermittelbar sind.

15. Verfahren nach einem der vorstehenden Ansprüche, **dadurch gekennzeichnet, dass** beim Anmelden und/oder beim Abmelden eines Kommunikationsendgeräts (2) eines Nutzers beim zentralen Kommunikationsgerät (1) automatisch ein Funktionsparameter des Kommunikationsendgeräts (2) umgestellt wird.

16. Zentrales Kommunikationsgerät (1) zur Durchführung eines Verfahrens zur Informationsübermittlung innerhalb einer Nutzergruppe gemäß einem der vorstehenden Ansprüche
- mit einem ersten Speicher zum Speichern von Registrierungsdaten von Kommunikationsendgeräten (2) der zur Nutzergruppe gehörenden Nutzer,
- mit einem zweiten Speicher zum Speichern von Informationen für die Nutzer,
- mit Mitteln zum Zuordnen der Informationen zu einer Nutzergruppe oder einer Teilgruppe der Nutzergruppe oder bestimmten, einzelnen Nutzern der Nutzergruppe,
- mit Mittel zum Ermitteln der Anwesenheit eines registrierten Kommunikationsendgerätes (2) an einem Standort oder in einem bestimmten räumlichen Aufenthaltsbereich um den Standort einer Schnittstelleneinrichtung (6) und/oder einer Ausgabeeineinrichtung (3, 4) des zentralen Kommunikationsgerätes (1),
- mit Mittel zur Versendung der dem Nutzer des als anwesend ermittelten Kommunikationsendgerätes (2) zugeordneten Informationen über die Schnittstelleneinrichtung (6) an das Kommunikationsendgerät (2) und/oder zur Ausgabe der entsprechenden Informationen mittels der Ausgabeeinrichtung (3, 4)und **gekennzeichnet durch** :
- Eine an das zentrale Kommunikationsgerät (1) angeschlossene Tastatur (8) zum Speichern von Informationen in dem zweiten Speicher.

17. Kommunikationsgerät nach Anspruch 16, **dadurch gekennzeichnet, dass** die Schnittstelleneinrichtung eine kurzreichweitige drahtlose Schnittstelle zum Datenaustausch mit einem Kommunikationsendgerät eines Nutzers umfasst.

18. Kommunikat ionsgerät nach Anspruch 16 oder 17, **dadurch gekennzeichnet, dass** die Schnittstelleneinrichtung (6) eine Kontaktschnittstelle (6) für ein Kommunikationsendgerät (2) eines Nutzers umfasst.

19. Kommunikat ionsgerät nach Anspruch 18, **dadurch gekennzeichnet, dass** für jedes Kommunikat ionsendgerät (2) jedes Nutzers eine Kontaktschnittstelle (6) zur Verfügung steht.

20. Kommunikationsgerät nach Anspruch 18 oder 19, **dadurch gekennzeichnet, dass** die Kontaktschnittstel le (6) jeweils einen Anschluss zum Aufladen eines Akkumulators des Kommunikationsendgeräts (2) aufweist.

21. Kommunikationsgerät nach einem der Ansprüche 16 bis 20, **gekennzeichnet durch** einen Festnet zanschluss (10).

22. Kommunikationsgerät nach einem der Ansprüche 16 bis 21, **gekennzeichnet durch** eine Mobilfunk-Sende/Empfangseinrichtung.

23. Kommunikationsgerät nach einem der Ansprüche 16 bis 22, **gekennzeichnet durch** eine Einrichtung (11) zur Ankopplung einer Haustelefonanlage (12, 13, 14).

24. Kommunikationsgerät nach einem der Ansprüche 16 bis 23, **gekennzeichnet durch** Mittel zum Weiterleiten von Verbindungen zwischen der Mobilfunk-Sende/Empfangseinrichtung und/oder dem Festnetzanschluss und/oder der Haustelefonanlage.

25. Kommunikationsgerät nach einem der Ansprüche 16 bis 24, **dadurch gekennzeichnet, dass** die Ausgabeeinrichtung (3, 4) ein Display (3) und/oder eine Sprachausgabeeinheit (4) umfasst.

26. Kommunikationsgerät nach einem der Ansprüche 16 bis 25, **gekennzeichnet durch** eine Tastaturschnittstelle (7) .

27. Kommunikationsgerät nach einem der Ansprüche 16 bis 26, **gekennzeichnet durch** eine Sprachsteuerungseinrichtung.

28. Kommunikationsgerät nach einem der Ansprüche 16 bis 27, **gekennzeichnet durch** eine Telematikeinrichtung zur Fernsteuerung von mit der Telematikeinrichtung gekoppelten Geräten mittels eines Kommunikationsendgeräts eines Nutzers und/oder mittels des Festnetzanschlusses.

29. Kommunikationsgerät nach einem der Ansprüche 16 bis 28, **gekennzeichnet durch** Mittel zum Anmelden eines registrierten Kommunikationsendgeräts (2) beim zentralen Kommunikationsgerät (1), sobald es sich an dem Standort oder in dem bestimmten Aufenthaltsbereich um den Standort der Schnittstellen- und/oder Ausgabeeinrichtung (3, 4, 6) befindet, und zum Abmelden des Kommunikationsendgeräts(2), wenn es vom Standort oder aus diesem Aufenthaltsbereich entfernt wird.

30. Kommunikat ionsgerät nach Anspruch 29, **gekennzeichnet durch** Mittel zum automatischen Umstellen eines Funktionsparameters eines Kommunikationsendgeräts eines Nutzers beim Anmelden und/oder beim Abmelden des Kommunikationsendgeräts beim zentralen Kommunikationsgerät.

## Claims

1. Method for transmitting information within a user group, wherein communication terminals (2) are assigned to the individual users of the user group, having the following steps:
- registering of the communication terminals (2) of the users belonging to the user group with a central communication device (1);
- storing of information in the central communication device (1), wherein the information is assigned to the whole user group or to a subgroup or to specific individual users of the user group;
- transmitting the information assigned to a user of a communication terminal (2) from the central communication device (1) to the communication terminal (2) via an interface device (6) of the central communication device (1) and/or outputting the information for the respective user by means of an output device (3, 4) of the central communication device (1);
- determining the presence of a registered communication terminal (2) at a location or in a specific spatial locality around the location of the interface device (6) and/or the output device (3, 4) of the central communication device (1), wherein the transmission and/or output of the information is performed if the communication terminal (2) of the respective user is determined as present or as soon as the communication terminal (2) of the respective user is determined as present; **characterized by**:
- the information is stored for the whole user group or a subgroup or specific individual users of the user group in the central communication device (1) by means of a keyboard (8) connected to the central communication

2. Method according to Claim 1, **characterized in that** the presence of a communication terminal (2) of a specific user is automatically determined whenever information is assigned to the specific user in the central communication device (1).

3. Method according to Claim 1 or 2, **characterized in that**, for determining the presence of a registered communication terminal (2), the communication terminal (2) is logged onto the central communication device (1) as soon as it is located at the location or in the specific locality around the location of the interface device and/or output device (3, 4, 6), and is logged off when it is removed from the location or from said locality.

4. Method according to Claim 3, **characterized in that** the logging on and/or logging off of a communication terminal (2) with the central communication device (1) is performed by means of a log-on or log-off signal respectively transmitted by the communication terminal (2) to the central communication device (1), wherein the transmission of the log-on or log-off signal respectively is actively triggered by the user of the communication terminal (2).

5. Method according to Claim 3 or 4, **characterized in that** the logging on and/or logging off of the communication terminal (2) of the user is performed automatically by the central communication device (1).

6. Method according to one of Claims 1 to 5, **characterized in that** the interface device (6) of the central communication device (1) comprises a contact interface (6) to the communication terminal (2) of the user.

7. Method according to one of Claims 1 to 6, **characterized in that** the interface device of the central communication device comprises a short-range wireless interface, and the locality around the location is correlated to the range of the interface.

8. Method according to one of Claims 1 to 7, **characterized in that**, during the transmission of information from the central communication device (1) to the communication terminal (2) and/or during a logging onto the central communication terminal (1), a communication terminal (2) transmits information for the user group, a subgroup or a specific user of the user group to the central communication device (2).

9. Method according to one of Claims 1 to 8, **characterized in that** the information transmission between the central communication device (1) and the communication terminal (1) comprises a database synchronization.

10. Method according to Claim 9, **characterized in that** the database comprises an appointments diary.

11. Method according to one of the preceding claims, **characterized in that** the communication terminals (2) of the users are mobile radio devices (2).

12. Method according to Claim 11, **characterized in that** a logged on communication terminal (2) of a user is used to transmit and/or to receive information from the central communication device (1) via a mobile radio network.

13. Method according to Claim 11 or 12, **characterized in that** the central communication device (1) has a fixed network interface (10) and calls of the user group arriving for a user on the fixed network interface are automatically diverted to the mobile radio device (2) of the user or to another predetermined line when the mobile radio device (2) of the user is logged off from the central communication device (1).

14. Method according to Claim 12 or 13, **characterized in that**, by means of (only) one command, a telephone conference circuit is switched from the central communication device (1) at least to all the communication terminals of the users of the user group who cannot be determined as present.

15. Method according to one of the preceding claims, **characterized in that** a function parameter of the communication terminal (2) is changed over automatically during logging on and/or during logging off of a communication terminal (2) of a user with the central communication device (1).

16. Central communication device (1) for carrying out a method for transmitting information within a user group as claimed in one of the preceding claims,
- having a first memory for storing registration data of communication terminals (2) of the users belonging to the user group,
- having a second memory for storing information for the users,
- having means for assigning the information to a user group or to a subgroup of the user group or to specific individual users of the user group,
- having means for determining the presence of a registered communication terminal (2) at a location or in a specific spatial locality around the location of an interface device (6) and/or an output device (3, 4) of the central communication device (1);
- having means for transmitting the information assigned to the user of the communication terminal (2) determined as present via the interface device (6) to the communication terminal (2) and/or for outputting the respective information by means of the output device (3, 4); and **characterized by**:
- a keyboard (8) connected to the central communication device (1) for storing information in the second memory.

17. Communication device according to Claim 16, **characterized in that** the interface device comprises a short-range wireless interface for data exchange with a communication terminal of a user.

18. Communication device according to Claim 16 or 17, **characterized in that** the interface device (6) comprises a contact interface (6) for a communication terminal (2) of a user.

19. Communication device according to Claim 18, **characterized in that** a contact interface (6) is available for every communication terminal (2) of every user.

20. Communication device according to Claim 18 or 19, **characterized in that** the contact interface (6) has in each case a connection for charging a battery of the communication terminal (2).

21. Communication device according to one of Claims 16 to 20, **characterized by** a fixed network interface (10).

22. Communication device according to one of Claims 16 to 21, **characterized by** a mobile radio transmitting/receiving device.

23. Communication device according to one of Claims 16 to 22, **characterized by** a device (11) for connecting an in-house telephone system (12, 13, 14).

24. Communication device according to one of Claims 16 to 23, **characterized by** means for forwarding calls between the mobile radio transmitting/ receiving device and/or the fixed network interface and/or the in-house telephone system.

25. Communication device according to one of Claims 16 to 24, **characterized in that** the output device (3, 4) comprises a display (3) and/or a voice output unit (4).

26. Communication device according to one of Claims 16 to 25, **characterized by** a keyboard interface (7).

27. Communication device according to one of Claims 16 to 26, **characterized by** a voice control device.

28. Communication device according to one of Claims 16 to 27, **characterized by** a telematics device for the remote control of devices connected to the telematics device by means of a communication terminal of a user and/or by means of the fixed network interface.

29. Communication device according to one of Claims 16 to 28, **characterized by** means for logging on a registered communication terminal (2) with the central communication device (1) as soon as it is located at the location or in the specific locality around the location of the interface device and/or output device (3, 4, 6), and for logging off the communication terminal (2) when it is removed from the location or from said locality.

30. Communication device according to Claim 29, **characterized by** means for the automatic changeover of a function parameter of a communication terminal of a user during logging on and/or during logging off of the communication terminal with the central communication device.

## Revendications

1. Procédé pour la transmission d'informations à l'intérieur d'un groupe d'utilisateurs, des terminaux de communication (2) étant associés aux différents utilisateurs du groupe, avec les étapes suivantes :
- enregistrement des terminaux de communication (2) des utilisateurs appartenant au groupe auprès d'un terminal de communication central (1),
- mémorisation d'informations dans le terminal de communication central (1), les informations étant associées à tout le groupe d'utilisateurs ou à un sous-groupe ou à certains utilisateurs individuels du groupe d'utilisateurs,
- transmission des informations associées à un utilisateur d'un terminal de communication (2) par le terminal de communication central (1) au terminal de communication (2) par l'intermédiaire d'un dispositif d'interface (6) du terminal de communication central (1) et/ou délivrance des informations destinées à l'utilisateur concerné au moyen d'un dispositif de sortie (3, 4) du terminal de communication central (1 ),
- détermination de la présence d'un terminal de communication enregistré (2) à l'emplacement ou dans une certaine zone de séjour autour de l'emplacement du dispositif d'interface (6) et/ou du dispositif de sortie (3, 4) du terminal de communication central (1), la transmission et/ou la délivrance des informations s'effectuant lorsque le terminal de communication (2) de l'utilisateur concerné est déterminé comme étant présent ou dès que le terminal de communication (2) de l'utilisateur concerné est déterminé comme étant présent,
**caractérisé par le fait que**
- la mémorisation d'informations destinées à tout le groupe d'utilisateurs ou à un sous-groupe ou à certains utilisateurs individuels du groupe d'utilisateurs s'effectue dans le terminal de communication central (1) au moyen d'un clavier (8) raccordé au terminal de communication central (1).

2. Procédé selon la revendication 1, **caractérisé par le fait que** la détermination de la présence d'un terminal de communication (2) d'un certain utilisateur s'effectue automatiquement lorsqu'une information est associée audit utilisateur dans le terminal de communication central (1).

3. Procédé selon la revendication 1 ou 2, **caractérisé par le fait que**, pour la détermination de la présence d'un terminal de communication enregistré (2), le terminal de communication (2) est annoncé auprès du terminal de communication central (1) dès qu'il se trouve à l'emplacement ou dans la zone de séjour déterminée autour de l'emplacement du dispositif d'interface et/ou de sortie (3, 4, 6) et il est sorti lorsqu'il s'éloigne de cet emplacement ou de cette zone de séjour.

4. Procédé selon la revendication 3, **caractérisé par le fait que** l'annonce et/ou la sortie d'un terminal de communication (2) auprès du terminal de communication central (1) s'effectuent au moyen d'un signal d'annonce ou de sortie envoyé par le terminal de communication (2) au terminal de communication central (1), l'envoi du signal d'annonce ou de sortie étant déclenché activement par l'utilisateur du terminal de communication (2).

5. Procédé selon la revendication 3 ou 4, **caractérisé par le fait que** l'annonce et/ou la sortie du terminal de communication (2) de l'utilisateur s'effectuent automatiquement au moyen du terminal de communication central (1).

6. Procédé selon l'une des revendications 1 à 5, **caractérisé par le fait que** le dispositif d'interface (6) du terminal de communication central (1) comprend une interface à contacts (6) vers le terminal de communication (2) de l'utilisateur.

7. Procédé selon l'une des revendications 1 à 6, **caractérisé par le fait que** le dispositif d'interface du terminal de communication central comprend une interface sans fil de courte portée et la zone de séjour autour de l'emplacement du dispositif est corrélée avec la portée de l'interface.

8. Procédé selon l'une des revendications 1 à 7, **caractérisé par le fait qu'**un terminal de communication (2) lors de la transmission d'informations du terminal de communication central (1) au terminal de communication (2) et/ou lors de l'annonce auprès du terminal de communication central (1) transmet au terminal de communication central (1) des informations destinées au groupe d'utilisateurs, à un sous-groupe ou à un certain utilisateur du groupe.

9. Procédé selon l'une des revendications 1 à 8, **caractérisé par le fait que** la transmission d'informations entre le terminal de communication central (1) et le terminal de communication (2) comprend une égalisation d'une base de données.

10. Procédé selon la revendication 9, **caractérisé par le fait que** la base de données comprend un agenda de rendez-vous.

11. Procédé selon l'une des revendications précédentes, **caractérisé par le fait que** les terminaux de communication (2) des utilisateurs sont des terminaux mobiles (2).

12. Procédé selon la revendication 11, **caractérisé par le fait qu'**un terminal de communication annoncé (2) d'un utilisateur est utilisé pour envoyer et/ou recevoir des informations à partir du terminal de communication central (1) par l'intermédiaire d'un réseau de radiocommunication mobile.

13. Procédé selon la revendication 11 ou 12, **caractérisé par le fait que** le terminal de communication central (1) comporte un raccordement de réseau fixe (10) et que des appels, arrivant pour un utilisateur sur le raccordement de réseau fixe, du groupe d'utilisateurs sont transférés automatiquement sur le terminal mobile (2) de l'utilisateur ou sur un autre raccordement prédéterminé lorsque le terminal mobile (2) de l'utilisateur est déclaré sorti au niveau du terminal de communication central (1).

14. Procédé selon la revendication 12 ou 13, **caractérisé par le fait que**, à partir du terminal de communication central (1), un service de conférence téléphonique peut être commuté au moyen d'une (seule) instruction au moins vers tous les terminaux de communication des utilisateurs du groupe d'utilisateurs qui ne peuvent pas être déterminés comme étant présents.

15. Procédé selon l'une des revendications précédentes, **caractérisé par le fait que**, lors de l'annonce et/ou de la sortie d'un terminal de communication (2) d'un utilisateur au niveau du terminal de communication central (1), un paramètre fonctionnel du terminal de communication (2) est automatiquement affecté.

16. Terminal de communication central (1) pour la mise en oeuvre d'un procédé de transmission d'informations à l'intérieur d'un groupe d'utilisateurs selon l'une des revendications précédentes,
- avec une première mémoire pour mémoriser des données d'enregistrement de terminaux de communication (2) des utilisateurs appartenant au groupe d'utilisateurs,
- avec une deuxième mémoire pour mémoriser des informations destinées aux utilisateurs,
- avec des moyens pour associer les informations à un groupe d'utilisateurs ou à un sous-groupe du groupe d'utilisateurs ou à certains utilisateurs individuels du groupe d'utilisateurs,
- avec des moyens pour déterminer la présence d'un terminal de communication enregistré (2) à l'emplacement ou dans une certaine zone de séjour autour de l'emplacement d'un dispositif d'interface (6) et/ou d'un dispositif de sortie (3, 4) du terminal de communication central (1),
- avec des moyens pour envoyer les informations, associées à l'utilisateur du terminal de communication (2) déterminé comme étant présent, par l'intermédiaire du dispositif d'interface (6) au terminal de communication (2) et/ou pour délivrer les informations correspondantes au moyen du dispositif de sortie (3, 4),
**caractérisé par**
- un clavier (8) raccordé au terminal de communication central (1) pour mémoriser des informations dans la deuxième mémoire.

17. Terminal de communication selon la revendication 16, **caractérisé par le fait que** le dispositif d'interface comprend une interface sans fil de courte portée pour l'échange de données avec un terminal de communication d'un utilisateur.

18. Terminal de communication selon la revendication 16 ou 17, **caractérisé par le fait que** le dispositif d'interface (6) comprend une interface à contacts (6) pour un terminal de communication (2) d'un utilisateur.

19. Terminal de communication selon la revendication 18, **caractérisé par le fait qu'**une interface à contacts (6) est disponible pour chaque terminal de communication (2) de chaque utilisateur.

20. Terminal de communication selon la revendication 18 ou 19, **caractérisé par le fait que** l'interface à contacts (6) comporte à chaque fois un raccordement pour charger une batterie du terminal de communication (2).

21. Terminal de communication selon l'une des revendications 16 à 20, **caractérisé par** un raccordement de réseau fixe (10).

22. Terminal de communication selon l'une des revendications 16 à 21, **caractérisé par** un dispositif d'émission et de réception de radiocommunication mobile.

23. Terminal de communication selon l'une des revendications 16 à 22, **caractérisé par** un dispositif (11) pour le raccordement d'une installation téléphonique privée (12, 13, 14).

24. Terminal de communication selon l'une des revendications 16 à 23, **caractérisé par** des moyens pour la retransmission de liaisons entre le dispositif d'émission et de réception de radiocommunication mobile et/ou le raccordement de réseau fixe et/ou l'installation téléphonique privée.

25. Terminal de communication selon l'une des revendications 16 à 24, **caractérisé par le fait que** le dispositif de sortie (3, 4) comprend un dispositif d'affichage (3) et/ou une unité de sortie vocale (4).

26. Terminal de communication selon l'une des revendications 16 à 25, **caractérisé par** une interface de clavier (7).

27. Terminal de communication selon l'une des revendications 16 à 26, **caractérisé par** un dispositif de commande vocale.

28. Terminal de communication selon l'une des revendications 16 à 27, **caractérisé par** un dispositif télématique pour commander à distance des appareils, couplés au dispositif télématique, au moyen d'un terminal de communication d'un utilisateur et/ou au moyen du raccordement de réseau fixe.

29. Terminal de communication selon l'une des revendications 16 à 28, **caractérisé par** des moyens pour annoncer un terminal de communication enregistré (2) auprès du terminal de communication central (1) dès qu'il se trouve à l'emplacement ou dans la zone de séjour autour de l'emplacement du dispositif d'interface et/ou de sortie (3, 4, 6) et pour sortir du système le terminal de communication (2) lorsqu'il s'éloigne de cet emplacement ou de cette zone de séjour.

30. Terminal de communication selon la revendication 29, **caractérisé par** des moyens pour affecter automatiquement un paramètre fonctionnel d'un terminal de communication d'un utilisateur lors de l'annonce et/ou lors de la sortie du terminal de communication auprès du terminal de communication central.
